(19) Europäisches Patentamt
European Patent Office
Office européen des brevets

(11) Publication number: **0 339 691 B1**

(12) **EUROPEAN PATENT SPECIFICATION**

(45) Date of publication of patent specification: **22.03.95** (51) Int. Cl.⁶: **C04B 35/532**

(21) Application number: **89110789.8**

(22) Date of filing: **28.05.86**

(60) Publication number of the earlier application in accordance with Art.76 EPC: **0 205 970**

(54) **Process for producing graphite films.**

(30) Priority: **30.05.85 JP 115417/85**
**28.06.85 JP 140207/85**

(43) Date of publication of application:
**02.11.89 Bulletin 89/44**

(45) Publication of the grant of the patent:
**22.03.95 Bulletin 95/12**

(84) Designated Contracting States:
**DE FR GB**

(56) References cited:
**US-A- 3 635 675**
**US-A- 4 497 728**

**CHEMICAL ABSTRACTS, vol. 77, no. 26, 25th December 1972, page 60, abstract nr.165891u, Columbus, Ohio, US; H.M. EZEKIEL: "Direct graphitization of polymer yarns"**

(73) Proprietor: **Research Development Corporation of Japan**
**5-2, Nagatacho 2-chome**
**Chiyoda-ku**
**Tokyo (JP)**

Proprietor: **MATSUSHITA ELECTRIC INDUSTRIAL CO., LTD.**
**1006, Oaza Kadoma**
**Kadoma-shi,**
**Osaka-fu, 571 (JP)**

(72) Inventor: **Murakami, Mutsuaki**
**2297 (13-21), Miwa-cho**
**Machida**
**Tokyo 194-01 (JP)**

(74) Representative: **von Kreisler, Alek,**
**Dipl.-Chem. et al**
**Patentanwälte**
**von Kreisler-Selting-Werner**
**Postfach 10 22 41**
**D-50462 Köln (DE)**

Rank Xerox (UK) Business Services
(3.10/3.09/3.3.3)

## Description

BACKGROUND OF THE INVENTION

(1) Technical Field

The present invention relates to a process for producing graphite films utilized in electrodes, heating elements, structures, gaskets for high-temperature and high-pressure instruments, heat-insulating materials, corrosion resistant sealing materials, brushes for electric use, X-ray monochromators and the like, particularly to a process for producing graphite films by heat treating a specific polymeric material as a starting material at a particular temperature.

(2) Background Information

Graphite holds an important position as industrial materials because of its outstanding heat resistance, chemical resistance, high electric conductivity and the like, and has been widely used as electrodes, heating elements and structures. Natural graphite may be used for such purposes. However, natural graphite occurs in an extremely limited amount and is intractable because of its powder or block form. Graphite has been, therefore, artificially produced.

Processes for producing such artificial graphite can be mainly classified into the following four processes.

In the first process, graphite is produced by separating from the melts of Fe, Ni/C system, decomposition of silicon carbide, aluminum carbide and so on, or cooling of the carbon melts under high temperature and high pressure. Graphite obtained in such manners is called Kish graphite, and has the same properties as those of natural graphite. According to this process, however, only a minute flake-like graphite is obtained. Therefore, together with the complexity of the manufacturing process and the expensive cost, this process has not been used in the industrial production.

The second process is one in which various organic or carbonaceous materials are graphitized by heating at a temperature of at least $3000\,^{\circ}$C. In this process, graphite having the same physical properties as those of natural graphite or Kish graphite can not be obtained. For example, natural graphite and Kish graphite have an electric conductivity in the direction of a-axis, which is the most typical property of graphite, of from $1 \times 10^4$ S/cm to $2.5 \times 10^4$ S/cm. In contrast to this, only the product having an electric conductivity of from $1 \times 10^3$ S/cm to $2 \times 10^3$ S/cm can generally be obtained by this process. That is to say, this fact shows that graphitization does not well proceed in this process. However, the products obtained by this second process have been widely employed in such uses that perfect graphite is not necessarily required, because of the simplicity of the manufacturing process. Therefore, if graphite having the properties similar to those of natural graphite can be obtained by this process, it can be said that the industrial meaning thereof is significantly important.

In the third process, graphite is produced by high-temperature decomposition, sedimentation and hot working of gaseous hydrocarbons , wherein annealing is effected at a temperature of $3400\,^{\circ}$C under a pressure of $10\text{kg/cm}^2$ for a long period of time. Graphite thus obtained is called highly orientated pyrographite and has almost the same properties as those of natural graphite. For example, it has an electric conductivity in the direction of a-axis of $2.5 \times 10^4$ S/cm. According to this process, graphite of considerably large sizes can be prepared, unlike Kish graphite. This process has, however, disadvantages that the manufacturing process is complicated and the cost is expensive.

By the fourth process, natural graphite is immersed in a mixed solution of concentrated nitric acid and concentrated sulfuric acid, and thereafter a spacing between graphite layers is expanded by heating. Graphite thus obtained is called Expand graphite, and is powdery. Accordingly, it is further necessary to apply high-pressure press working to it in the presence of an adhesive, in order to make it sheet-like. Sheet-like graphite thus obtained is inferior to natural monocrystal graphite in properties. For example, the electric conductivity of sheet-like graphite is ordinary about $1.2 \times 10^3$ S/cm. Further, a large amount of acids is required in this process. As a result, there are caused many problems such as generation of $SO_x$ and $NO_x$ gases, corrosion of metals due to exudation of residual acids.

As described hereinabove, the second and the fourth processes of the conventional processes 1 through 4 can not provide graphite having properties similar to those of natural monocrystal graphite. On the other hand, the first and the third processes can provide graphite having properties almost similar to those of natural monocrystal graphite, but have disadvantages that the processes are complicated and the products are highly expensive. The fourth process also contains many problems in the process.

2

Then, the problems of the second process which can be most easily conducted will hereinafter be further described in detail. In this process, there are usually used as starting materials a carbonaceous material such as coke or the like and a binder such as pitch, coal tar or the like, and sometimes various polymers. However, perfect graphite can not be obtained from these starting materials as already described, even if they are heat treated at a temperature of about $3000°C$. For example, the electric conductivity of the product is usually in the range of 100S/cm to 1000S/cm, which is lower than one-tenth as large as that of perfect graphite.

With respect to carbon structures produced at a temperature of about $3000°C$, considerably various kinds of these structures exist from one relatively near to the graphite structure to one far away therefrom. Carbon which can be relatively easily converted to a graphitic structure by the mere heat treatment in this way is called graphitizable (soft) carbon, and carbon which is not so is called non-graphitizable (hard) carbon. The cause for such a difference in the structure is closely related to the mechanism of graphitization, and depends on whether the structural defects present in the carbon precursor are easily removed by the succeeding higher heat treatment or not. Of course, on the production of graphite films, a raw material from which graphitizable carbon is most easily produced is selected. However, it is difficult to remove completely the induced structural defects by heating. Accordingly, it has not hitherto been achieved to produce a graphite film which has the properties similar to those of natural monocrystal graphite by a mere heat treatment. Therefore, the fine structure of the carbon precursor plays an important role to the graphitizing property.

Against these processes using coke or the like as the starting material, some studies have been carried out to produce graphitic films by heat treating polymeric materials. It has been considered that these studies intend to control the fine structure of the carbon precursor while efficiently using the molecular structure of the polymeric material. In this process, the polymeric material is heat treated in vacuo or in an inert gas, and through decomposition and polycondensation reaction, the carbonaceous material is formed. In this case, however, graphitic films are not necessarily obtained from all of the polymeric materials used as the starting materials. Most of the polymeric materials can not rather be used for this purpose. The reason thereof will be explained as follows.

The reaction pathways of the polymeric compounds on heating are generally classified into three types, namely (1) gasification by random decomposition or depolymerization, (2) carbonization via pitch-like melts, and (3) carbonization while maintaining their solid state.

In the case of the reaction pathway (1), evaporation and gasification cause only little carbonaceous material. It is apparent, therefore, that this type polymers may not be graphitization.

Many of the materials which follow the reaction pathway (2) belong to a class of graphitizable materials. When they are merely heated in a non-oxidizing gas, however, they are lost to a great extent by evaporation and gasification. For this reason, in general, they are preliminarily heated in the presence of oxygen, to cross link the polymer chains to each other with oxygen, and thereafter carbonized or graphitized. At the same time, however, this causes the polymeric materials originally belonging to a class of graphitizable materials to be converted to non-graphitizable materials. Accordingly, the films having a structure near to the perfect graphite can not be obtained from the polymers preliminarily treated with oxygen, even if they are heat treated at a temperature of at least $3000°C$.

The reaction pathway (3), namely carbonization while maintaining the solid state, is most favorable from the viewpoint of the formation of the carbonaceous materials. However, most of the polymers which decompose through the pathway (3) are known to belong to a class of non-graphitizable materials and not to be capable of being converted to graphite films, even if they are heat treated at a temperature of at least $3000°C$. That is to say, for the polymeric materials which can form graphitic films, it is necessary to satisfy both two requirements that they form the carbonaceous material by the heat treatment and that they belong to a class of graphitizable materials. As the polymers attempted to be heat treated for such a purpose, there are mentioned phenolformaldehyde resins, polyacrylonitrile, cellulose, polyimides, polyparaphenylenes, polyparaphenylene oxides, polyvinyl chloride and the like. Since all of them belong to a class of non-graphitizable materials, any product having a high degree of graphitization has not yet been obtained. The sole problem of the process for heat treating these polymers is how to find out such a polymeric material that easily forms the graphite film.

Some methods for producing graphite fibers have recently been offerred. Thus, Chemical Abstract 77:165,891u (1972) describes a high-temperature graphitization which consisted of passing the fiber [polyacrylonitrile, polybenzimidazole, polyoxadiazole and X-101 aromatic polyamide first stabilized by heating in air under tension at $415-485°$] upward through a furnace at $2460-2985°C$ under tension in an argon atmosphere.

3

US-A-3,635,675 describes a process for graphitizing polymeric fibers comprising the steps of stabilizing synthetic polymer fibers by heating said fibers in an oxidizing atmosphere at a temperature in the range of about 200-500°C., and thereafter rapidly heating said stabilized synthetic polymer fibers in an inert atmosphere to a temperature in the range of 1,800°-3,200°C.

The present inventors have found that the preheating procedure in oxygen brings a bad effect to the produced graphitized polymeric films.

The present invention has been completed for resolving several problems in the preparation of artificial graphite films described above. It is a primary object of the present invention to provide graphite films of good quality having properties similar to those of natural graphite and a high mechanical strength by an easy process that a polymer having a particular structure is heat treated in an inert gas or in vacuo.

In accordance with the present invention, there is provided a process for producing a graphite film, which comprises heat treating a film of at least one polymer selected from the group consisting of a polyoxadiazole, polybenzothiazoles, a polybenzobisthiazole, a polybenzoxazole, a polybenzobisoxazole, poly(pyromellitic acid imide), poly(m-phenylene isophthalic acid amide), poly(m-phenylenebenzoimidazole), poly(m-phenylenebenzobisimidazole) and a polythiazole at a temperature of at least 1800°C in vacuo or in an inert gas, then impregnating the film with a binder component, and heat treating the impregnated film at a temperature of not more than 1400°C.

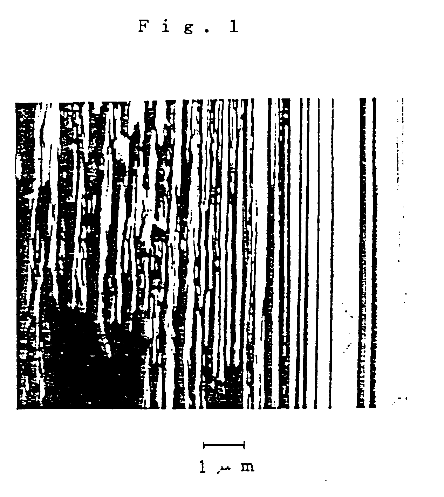

FIG. 1 is an electron microphotograph showing a layer structure of a graphite film formed by heat treating a poly(p-phenyleneoxadiazole) film at 2500°C in argon.

The heat treatment for graphitization can be carried out under elevated pressure and in the presence of a catalyst, and thereby the graphitization can be enhanced.

The pressure applied is 2Kb or more, preferably 5Kb or more. As the catalyst, there can be used an element belonging to one of the groups IVb through VIIb and VIII of the periodic table, for example, a finely divided powder of Fe, Co, P, Sn, Ni, Sb or the like.

The process of the present invention can not always be applied to all polymers, but limitedly applied to the polymers from which the polymeric films having a specific layer structure can be obtained when heat treated at a temperature of at least 1800°C. Utilizing these interlayers, a binder component is soaked between the layers, and then heat treated at an appropriate temperature, whereby interlayer bond becomes strong and the film has high strength. At present, therefore, the application of the process of the present invention is limited to the polymers shown in Table 1. There are collectively shown in Table 1 the names, structural formulas and abbreviations of the polymers which are employed as starting raw materials in the process of the present invention.

Table 1

| Name of polymer | Abbreviation | Structural formula |
|---|---|---|
| Poly(p-phenylene-oxadiazole) | POD | |
| Polybenzoxazole | PBO | |
| Polybenzo-bisoxazole | PBBO | |
| Polythiazole | PT | |
| Polybenzo-bisthiazole | PBBT | |
| Poly(pyromellitic acid imide) | PI | |
| Poly(m-phenylene isophthalic acid amide) | PA | |
| Poly(m-phenylene-benzoimidazole) | PBI | |
| Poly(m-phenylene-benzobisimidazole) | PBBI | |
| Polybenzothiazole | PBT-1 | |
| Polybenzothiazole | PBT-2 | |
| Polybenzothiazole | PBT-3 | |

In FIG. 1, there is given an electron microphotograph showing a layer structure of a graphite film formed by heat treating a polyoxadiazole (POD) film at 2500°C in argon, as an example of layer structures.

With respect to the polymer films produced according to the process of the present invention, such a layer structure is usually formed at a temperature of at least 1800°C. It is necessary, therefore, to heat the starting film at a temperature of at least 1800°C. Actually, the film treated at a temperature of less than 1800°C could not be impregnated with the binder, in spite of the impregnant treatment with the binder.

As the binder, there are mentioned carbonaceous materials, synthetic resins, fats and oils, metals, inorganic compounds and the like. Although pitch is mainly used as a carbonaceous material, a low viscosity substance such as tar, creosote oil, acenaphthene or the like may be incorporated therein, for controlling a degree of porosity.

As the synthetic resins, there can be widely employed epoxy resins, phenol resins, furfuryl alcohol resins, polyesters, polyvinylidene chloride, polydivinylbenzene, polyvinyl butyral and the like. The fats and oils include linseed oil, tung oil and the like, and the metals include white metals, copper, aluminum and the like. As the inorganic compounds, there are used phosphates, alumina, water glass and the like. The binder is selectively added in such an amount that the strength of the film is increased and the essential properties of the graphitized film are not lost. Although the amount in which the binder is permitted to be added varies with the kind of binder, it is usually suitable to be added in an amount of 5 to 20% by weight, based on the graphite film. Although the secondary heating temperature also varies with the kind of binder, it is appropriately selected in the range of not more than 1400°C in general. The temperature of more than 1400°C is not only unnecessary, but also weakens the binding force and causes the strength of the film to be lost, in some cases. When a synthetic resin is used as the binder, the heat treatment at elevated temperature is not required. In the case of the polymers such as polyvinyl butyral, polyesters and polyvinylidene chloride, the sufficient strength can be obtained only by drying at a temperature of 50° to 100°C after impregration. The heating time is 10 minutes to 4 hours, preferably 30 minutes to 1 hour.

With an increase of the added amount of the binder, the original properties of the graphitized film come to be lost, as a matter of course. Accordingly, the property of the graphitized film is estimated here by determination of electric conductivity which can be most easily measured.

In order to indicate the extent of graphitization, parameters measured by X-ray diffraction such as lattice constant, crystallite size in the direction of C-axis and the like, and degree of graphitization calculated therefrom are usually used. Also, the value of electric conductivity is often utilized. The lattice constant is calculated from the position of the (002) diffraction line of X-ray. It is shown that the closer the constant is to 0.6708 nm (6.708Å) which is the lattice constant of natural monocrystal graphite, the more the graphite structure is developed. The crystallite size in the direction of C-axis is calculated from the half breadth of the (002) diffraction line. It is shown that the larger the value thereof is, the more the planar structure of graphite is developed. The craystallite size of natural monocrystal graphite is at least 100 nm (1000Å). The degree of graphitization is calculated from the crystal face spacing ($d_{002}$) by the method described in the literature (Merig and Maire, Les Carbons, Vol. 1, page 129 (1965)). In the case of natural monocrystal graphite, of course, it shows 100%. The value of electric conductivity refers to the value in the direction of a-axis of graphite. As to natural monocrystal graphite, it shows $1 \times 10^4$ to $2.5 \times 10^4$ S/cm. The larger value of electric conductivity shows the better approximation to the graphite structure.

According to the present invention, a film of at least one polymer selected from the group consisting of POD, PBO, PBBO, PT, PBBT, PI, PA, PBI, PBBI, PBT-1, PBT-2 and PBT-3 is heat treated at a temperature of at least 1800°C in vacuo or in an inert gas to be converted to a graphitized film, and then the film is impregnated with a binder, followed by the secondary heat treatment at a temperature of not more than 1400°C. Thus, the mechanical strength can be imparted to the graphitized film without a decrease in its properties. The present invention relates to a process for producing a graphite film, which comprises heat treating film of at least one polymer selected from the group consisting of a polyoxadiazole, polybenzothiazoles, a polybenzobisthiazole, a polybenzoxazole, a polybenzobisoxazole, poly(pyromellitic acid imide), poly(m-phenylene isophthalic acid amide), poly(m-phenylenebenzoimidazole), poly(m-phenylenebenzobisimidazole) and a polythiazole at a temperature of at least 1800°C in vacuo or in an inert gas, then impregnating the film with a binder component and heat treating again the impregnated film at a temperature of not more than 1400°C. According to this process, it has become feasible to produce graphitic films excellent in electric conductivity and in mechanical properties.

Graphite films obtained by the process of the present invention can be widely utilized in electrodes, heating elements, structures, gaskets for high-temperature and high-pressure instruments, heat-insulating materials, corrosion-resistant sealing materials, brushes for electric applications, X-ray monochromators, reducers for atomic piles and the like.

The present invention will now be described in detail with reference to the following examples that by no means limit the scope of the invention.

The extent of graphitization is evaluated by the values of lattice constant, degree of graphitization, electric conductivity and the like.

The individual properties of graphite is measured according to the following procedures.

1. Lattice constant ($C_o$)

The X-ray diffraction line of the sample is measured by the Cu $K_\alpha$ -ray using a Phillips Model PW-1051 X-ray diffractometer. The value of $C_o$ is calculated from the (002) diffraction line which appears in the neighborhood of $2\theta$ equal to 26° to 27° by using the following Bragg's formula:

$$n\lambda = 2d \sin \theta$$

where 2d is equal to $C_o$, n is equal to 2, and $\lambda$ is the wavelength of X-ray.

2. Crystallite size ($L_c$)

Crystallite size ($L_c$) is calculated from the half breadth ($\beta$) of the diffraction line obtained by correcting the (002) diffraction line, according to the following relational formula:

$$L = \frac{K \lambda}{\beta \cdot \cos \theta}$$

where K is the shape factor.

3. Degree of graphitization (%)

Degree of graphitization is calculated from the value of face spacing (d) by using the following formula:

$$d_{002} = 3.354g + 3.44(1-g)$$

where g shows the extent of graphitizaiton, from the perfect graphite when g is equal to 1 to the amorphous carbon when g is equal to 0.

4. Electric conductivity (S/cm)

The sample is fitted with four-terminal electrodes by using silver paste and golden wires.
The value of electric conductivity is determined by applying the electric current to the outer electrodes and measuring the voltage drop at the inner electrodes, and further determining the width, length and thickness of the sample under a microscope.

Example 1

$25\mu$m-thick POD films, each of which was securely fitted on a frame made of stainless steel, were preliminarily heat treated in argon by using a Sankyo Electric Furnace Model LTF-8 electric furnace, elevating the temperatures from room temperature to 700°C at a rate of 10°C/min. The POD films are contracted to 80% of the original dimension in the range of these temperatures, when not fitted on the frame of stainless steel. Therefore, the fitting of the films on the frame results in the preliminary heat treatment while applying tension. Each of the POD films thus preliminarily heat treated was sandwiched by graphite plates, and heat treated in a stream of argon at desired temperatures ($T_p$) for one hour, after the temperatures were increased at a rate of 10°C/min. The temperatures were then lowered at a rate of 20°C/min. A Shinsei Electric Furnace Model 46-1 electric furnace equipped with carbon heaters was employed for the heat treatment. The black films obtained at temperatures ($T_p$) of not higher than 1400°C were brittle and free from flexibility. At temperatures ($T_p$) of at least 1800°C, however, the films having flexibility were obtained.

In Table 2, there are shown data of electric conductivity, lattice constant, crystallite size and degree of graphitization measured for POD films treated at various temperatures ($T_p$). Included in Table 2 for comparison are data of properties measured for POD films heat treated under the same conditions without the preliminary heat treatment.

Table 2

| Preliminary heat treatment | $T_p$ (°C) | Lattice constant $C_o$ nm (Å) | Crystallite size $L_c$ nm (Å) | Degree of graphitization (%) | Electric conductivity (S/cm) |
|---|---|---|---|---|---|
| Applied | 1400 | 0.688 (6.88) | 3.0 (30) | 0 | 600 |
| Applied | 1600 | 0.686 (6.86) | 7.0 (70) | 11 | 880 |
| Applied | 1800 | 0.6802 (6.802) | 18.0 (180) | 45 | 1300 |
| Applied | 2000 | 0.6760 (6.760) | 61.0 (610) | 70 | 2000 |
| Applied | 2200 | 0.6722 (6.722) | >100 (>1000) | 92 | 6000 |
| Applied | 2400 | 0.6716 (6.716) | >100 (>1000) | 95 | 7800 |
| Applied | 2600 | 0.6710 (6.710) | >100 (>1000) | 99 | 9900 |
| Applied | 2800 | 0.6708 (6.708) | >100 (>1000) | 100 | 14000 |
| | | | | | |
| Not applied | 1400 | 0.689 (6.89) | 2.5 (25) | 0 | 510 |
| Not applied | 1600 | 0.688 (6.88) | 4.0 (40) | 0 | 750 |
| Not applied | 1800 | 0.686 (6.86) | 7.5 (75) | 11 | 900 |
| Not applied | 2000 | 0.6828 (6.828) | 28.0 (280) | 30 | 1400 |
| Not applied | 2200 | 0.6756 (6.756) | 85.0 (850) | 72 | 2300 |
| Not applied | 2400 | 0.6729 (6.729) | >100 (>1000) | 88 | 5500 |
| Not applied | 2600 | 0.6713 (6.713) | >100 (>1000) | 97 | 8000 |
| Not applied | 2800 | 0.6708 (6.708) | >100 (>1000) | 100 | 10000 |

In the case of the POD films which were not preliminarily heat treated, graphitization is initiated at a temperature of at least 1800°C, and rapidly proceeds at a temperature of 2000° to 2500°C. Against this, in the case of the POD films which were preliminarily heat treated, graphitization is initiated at a temperature of at least 1600°C, and rapidly proceeds at a temperature of 1800°C to 2200°C. At 2500°C, almost perfect graphite is obtained. The values of lattice constant, crystallite size and the like of this almost perfect graphite are similar to those of natural monocrystal graphite. That is to say, the graphitization reaction of the POD films can be performed at a temperature lowered by at least 200°C by the preliminary heat treatment.

The similar results can be obtained also in the other inert gases or in vacuo.

Example 2

25µm-thick POD films, each of which was sandwiched by graphite substrates, were heat treated in an argon at 2800°C for one hour, after the temperature was increased at a rate of 10°C/min. For this heat treatment, an electric furnace equipped with carbon heaters (Shinsei Electric Furnace Model 46-1 ultra high temperature furnace) was employed. The films thus obtained were once cooled to room temperature, and then impregnated with an initial polymer of furfuryl alcohol (Hitafuran 302 supplied by Hitachi Chemical Co., Ltd.). After curing the absorbed furfuryl alcohol by polymerization, the films were heat treated at 1000°C for 40 minutes by using a Sankyo Electric Furnace Model UTF-8 electric furnace. After the heat treatment, the absorbed amounts of the binder component were determined by the weight measurements. Thereafter, the electric conductivity, tensile strength and bending strength of the films were measured. The results thereof are shown in Table 3. It is understandable that the tensile strength and bending strength of the film can be extremely improved, without a decrease in the electric conductivity of the film, when the amount of binder is not more than 20% by weight based on the graphite film.

Table 3

| Amount of binder (% by weight) | Electric conductivity (S/cm) | Tensile strength (MPa) | Bending strength (MPa) |
|---|---|---|---|
| 0 | 10000 | 240 | 80 |
| 5.2 | 11000 | 600 | 400 |
| 10.3 | 10000 | 1000 | 500 |
| 20 | 9300 | 1200 | 510 |
| 33 | 6200 | 1300 | 530 |

Example 3

POD films heat treated at 2800°C in the similar manner as in Example 2 were impregnated with mixtures of acenaphthene and pitch at a temperature of 200°C. After the impregnation, the films were heated to 700°C at a rate of 10°C/min, and then secondarily heat treated for 30 minutes, by using a Sankyo Electric Furnace Model UTF-8 electric furnace. By changing proportions of acenaphthene and pitch in the mixtures, the absorbed amounts of the mixtures were altered. There are shown in Table 4 data of electric conductivity, tensile strength and bending strength measured for the films thus prepared.

It can be seen that, also in the case that pitch is used as the binder, an improvement of mechanical strength similar to that of Example 2 is observed, and that its effect becomes remarkable when the added amount of the binder exceeds 5% by weight and, contrariwise, the electric conductivity is reduced when the added amount is 27% by weight.

Table 4

| Amount of binder (% by weight) | Electric conductivity (S/cm) | Tensile strength (MPa) | Bending strength (MPa) |
|---|---|---|---|
| 0 | 10000 | 240 | 80 |
| 1.3 | 10000 | 260 | 110 |
| 2.8 | 10000 | 260 | 140 |
| 5.2 | 10000 | 530 | 340 |
| 16 | 9600 | 870 | 490 |
| 27 | 7100 | 1000 | 520 |

Example 4

Twelve polymers of POD, PBO, PBBO, PT, PBBT, PI, PA, PBI, PBBI, PBT-1, PBT-2 and PBT-3 were heat treated at 2500°C in the same manner as in Example 2. The heat-treated films thus obtained were impregnated with mixtures of acenaphthene and pitch at a temperature of 200°C. After the impregnation, the secondary heat treatment was carried out by heating the films at 900°C for 30 minutes, using a Sankyo Electric Furnace Model UTF-8 electric furnace. By changing proportions of acenaphthene and pitch in the mixtures, the absorbed amounts of the binder were altered. There are given in Table 5 data of electric conductivity, tensile strength and bending strength measured for the films thus prepared. It is understandable that the other polymers can also be impregnated with the binder, as is the case with POD, and that the impregnation of the binder component and the succeeding heat treatment cause the mechanical properties such as tensile strength and bending strength to be extremely improved. Further, it can be seen that the electric conductivity usually tends to decline when the absorbed amount of the binder exceeds about 20% by weight.

Table 5

| Polymer (Abbreviation) | Amount of binder (% by weight) | Electric conductivity (S/cm) | Tensile strength (MPa) | Bending strength (MPa) |
|---|---|---|---|---|
| POD | 0<br>4.8<br>16 | 7500<br>7500<br>6200 | 270<br>550<br>890 | 90<br>350<br>510 |
| PBO | 0<br>4.2<br>18 | 2500<br>2600<br>1400 | 200<br>610<br>780 | 98<br>290<br>710 |
| PBBO | 0<br>4.5<br>19 | 2900<br>3000<br>1600 | 220<br>540<br>910 | 80<br>320<br>460 |
| PT | 0<br>5.1<br>20 | 1700<br>1600<br>1000 | 280<br>510<br>720 | 85<br>340<br>520 |
| PBBT | 0<br>5.0<br>17 | 2800<br>2800<br>1900 | 310<br>750<br>1010 | 90<br>270<br>440 |
| PI | 0<br>4.3<br>18 | 520<br>570<br>220 | 470<br>720<br>820 | 85<br>310<br>420 |
| PA | 0<br>4.0<br>16 | 1400<br>1500<br>1300 | 200<br>600<br>920 | 95<br>310<br>500 |
| PBI | 0<br>5.3<br>22 | 2800<br>2800<br>1700 | 350<br>610<br>970 | 100<br>420<br>670 |
| PBBI | 0<br>4.8<br>19 | 2900<br>3000<br>2100 | 340<br>590<br>940 | 100<br>370<br>850 |
| PBT-1 | 0<br>4.7<br>18 | 2700<br>2800<br>2000 | 310<br>640<br>890 | 85<br>290<br>610 |
| PBT-2 | 0<br>5.0<br>21 | 2300<br>2300<br>1900 | 270<br>600<br>910 | 100<br>270<br>590 |
| PBT-3 | 0<br>4.2<br>16 | 2200<br>2100<br>1900 | 240<br>710<br>1020 | 75<br>230<br>520 |

Example 5

POD films heat treated at 2800°C in the similar manner as in Example 2 were impregnated with an epoxy resin (Sumiepoxy ELM-434, supplied by Sumitomo Chemical Co., Ltd.) by a conventional method. After the impregnation, the films were heat treated at 80°C for 1 hour, at 150°C for 1 hour, and finally at 170°C for 1 hour, and thereby the epoxy resin was cured. There are given in Table 6 data of electric conductivity and tensile strength of the films thus prepared.

Table 6

| Amount of binder (% by weight) | Electric conductivity (S/cm) | Tensile strength (MPa) |
| --- | --- | --- |
| 0 | 7500 | 270 |
| 3.7 | 7400 | 350 |
| 12.6 | 6900 | 620 |

Graphitized films were impregnated in the similar manner as in Example 4 with other binders such as linseed oil, tung oil, epoxy resins, phenol resins, polyesters, polyvinylidene chloride, polydivinylbenzene, polyvinyl butyral, polyamides, polyimides, polyamideimides, white metals, phosphates, alumina and water glass, and then heat treated, whereby the similar results could be obtained.

**Claims**

1. A process for producing a graphite film, which comprises heat treating a film of at least one polymer selected from the group consisting of a polyoxadiazole, polybenzothiazoles, a polybenzobisthiazole, a polybenzoxazole, a polybenzobisoxazole, poly(pyromellitic acid imide), poly(m-phenylene isophthalic acid amide), poly(m-phenylenebenzoimidazole), poly(m-phenylenebenzobisimidazole) and a polythiazole at a temperature of at least 1800°C in vacuo or in an inert gas, then impregnating the film with a binder component, and heat treating the impregnated film at a temperature of not more than 1400°C.

2. A process for producing a graphite film as claimed in claim 1, wherein the binder component is at least one member selected from the group consisting a furfuryl alcohol resin, an epony resin, acenaphthene and pitch.

**Patentansprüche**

1. Verfahren zur Herstellung eines Graphit-Films, umfassend die Hitze-Behandlung eines Films Wenigstens eines Polymers, das aus der aus einem Polyoxadiazol, Polybenzothiazolen, einem Polybenzobisthiazol, einem Polybenzoxazol, Polybenzobisoxazol, Poly(pyromellitsäureimid), Poly(m-phenylenisophthalsäureamid), Poly(m-phenylenbenzimidazol), Poly(m-phenylenbenzobisimidazol) und einem Polythiazol bestehenden Gruppe ausgewählt ist, bei einer Temperatur von Wenigstens 1800°C im Vakuum oder in einem Inertgas, danach das Imprägnieren des Films mit einer Bindemittel-Komponente und die Hitze-Behandlung des imprägnierten Films bei einer Temperatur von nicht mehr als 1400°C.

2. Verfahren zur Herstellung eines Graphit-Films nach Anspruch 1, worin die Bindemittel-Komponente wenigstens eine Komponente ist, die aus der aus einem Furfurylalkohol-Harz, einem Epoxy-Harz, Acenaphthen und Pech bestehenden Gruppe ausgewählt ist.

**Revendications**

1. Procédé de production d'une pellicule de graphite, qui comprend le traitement thermique d'une pellicule d'au moins un polymère, choisi dans le groupe comprenant un polyoxadiazole, des polybenzothiazoles, un polybenzobisthiazole, un polybenzoxazole, un polybenzobisoxazole, du poly(imide de l'acide pyromellitique), du poly(amide de l'acide m-phénylène isophtalique), du poly(m-phénylènebenzoimidazole), du poly(m-phénylènebenzobisimidazole), et un polythiazole, à une température d'au moins 1800°C, sous vide ou dans un gaz inerte, puis l'imprégnation de la pellicule par un composant liant et le traitement thermique, à une température non supérieure à 1400°C, de la pellicule imprégnée.

2. Procédé pour produire une pellicule de graphite tel que revendiqué à la revendication 1, dans lequel le composant liant est au moins un composant choisi dans le groupe comprenant une résine d'alcool furfurylique, une résine époxyde, de l'acénaphtène et du brai.

F i g . 1

⊢———⊣
1 μ m